# EUROPEAN PATENT APPLICATION

(11) **EP 4 773 593 A1**
(43) Date of publication of application: **08.07.2026**
(21) Application number: 25808831.9
(22) Date of filing: 20.03.2025
(51) Int. Cl.: H04N 13/296

(54) **ADAPTIVE CAMERA MOVEMENT METHOD AND RELATED APPARATUS**

(30) Priority: 06.05.2024 CN 202410549588
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Jianlin, Shenzhen, Guangdong 518000 (CN)
(74) Representative: Huang, Liwei
(86) International application number: PCT/CN2025/083802
(87) International publication number: WO 2025/232356

(57) **Abstract**

The present disclosure provides an adaptive camera movement method and related apparatus. The method includes: determining, based on a first pose and a predicted arrival position, whether a first scene element in a first image corresponding to the first pose occludes the predicted arrival position, the first image being an image obtained by a virtual camera at the first pose; determining a second pose of the virtual camera in response to determining that the first scene element in the first image occludes the predicted arrival position; controlling the virtual camera to capture a second image of a virtual scene at the second pose; and displaying the second image, and displaying, at the predicted arrival position in the second image, a virtual identifier representing a mobile device. By adjusting the pose of the virtual camera, the problem that the mobile device is occluded by a scene element in the image captured by the virtual camera can be avoided, a comfortable 3D observation perspective can be continuously presented, a user can conveniently view operation progress, difficulty of use is reduced, and the degree of intelligence is improved.

## Description

### Field

The present disclosure relates to computer technologies, and particularly to an adaptive camera movement method and related apparatus.

### Background

As technology develops, more and more applications display a map and positions of devices in the map, so that the map and the positions of the devices in the map can be displayed in three dimensions (3D). In 3D display, however, the device may be occluded by three-dimensional elements. Accordingly, handling occlusion has become increasingly important.

Currently, traditional handling of occlusion generally relies on a user manually adjusting map display, which requires the user to be relatively familiar with map operation gestures, resulting in a relatively high degree of difficulty for the user and a low degree of intelligence.

### Summary

The present disclosure provides an adaptive camera movement method and related apparatus. By adjusting a pose of a virtual camera, the problem that scene elements occlude a mobile device in an image captured by the virtual camera can be avoided, and a comfortable 3D observation perspective can be continuously presented, thereby facilitating a user in viewing operation progress, reducing difficulty of use, and improving the degree of intelligence.

According to a first aspect, an embodiment of the present disclosure provides an adaptive camera movement method, including: obtaining a first pose of a virtual camera and a predicted arrival position of a mobile device in a virtual scene; determining, based on the first pose and the predicted arrival position, whether a first scene element in a first image corresponding to the first pose occludes the predicted arrival position, the first image being an image obtained by the virtual camera at the first pose; determining a second pose of the virtual camera in response to determining that the predicted arrival position is occluded by the first scene element in the first image; controlling the virtual camera to capture a second image of the virtual scene at the second pose; and displaying the second image, and displaying, at the predicted arrival position in the second image, a virtual identifier representing the mobile device.

According to a second aspect, an embodiment of the present disclosure provides an adaptive camera movement apparatus, including: an obtaining unit configured to obtain a first pose of a virtual camera and a predicted arrival position of a mobile device in a virtual scene; a first determining unit configured to determine, based on the first pose and the predicted arrival position, whether a first scene element in a first image corresponding to the first pose occludes the predicted arrival position, the first image being an image obtained by the virtual camera at the first pose; a second determining unit configured to determine, in response to a determination that the predicted arrival position is occluded by the first scene element in the first image, a second pose of the virtual camera; a control unit configured to control the virtual camera to capture a second image of the virtual scene at the second pose; and a display unit configured to display the second image, and display, at the predicted arrival position in the second image, a virtual identifier representing the mobile device.

According to a third aspect, an embodiment of the present disclosure provides an electronic device, including a processor, a memory, and one or more programs, the one or more programs being stored in the memory and configured to be executed by the processor, the one or more programs including instructions for performing the above adaptive camera movement method.

According to a fourth aspect, an embodiment of the present disclosure provides a computer-readable storage medium storing computer program instructions, the computer program instructions, when executed by a processor, causing implementation of the above adaptive camera movement method.

According to a fifth aspect, an embodiment of the present disclosure provides an adaptive camera movement system, including the above electronic device and a mobile device, wherein the mobile device includes a body, a movement assembly, a positioning module, and a communication module, the movement assembly being configured to drive the body to move, the positioning module being configured to position the body, and the communication module being configured to send second position information to the electronic device.

In the adaptive camera movement method provided in the embodiments of the present disclosure, a first pose of a virtual camera and a predicted arrival position of a mobile device in a virtual scene are first obtained; then, based on the first pose and the predicted arrival position, it is determined whether a first scene element in a first image corresponding to the first pose occludes the predicted arrival position, the first image being an image obtained by the virtual camera at the first pose; in response to determining that the predicted arrival position is occluded by the first scene element in the first image, a second pose of the virtual camera is determined; then the virtual camera is controlled to capture a second image of the virtual scene at the second pose; and finally the second image is displayed, and a virtual identifier representing the mobile device is displayed at the predicted arrival position in the second image. In this way, by adjusting the pose of the virtual camera, the problem that scene elements occlude the mobile device in an image captured by the virtual camera can be avoided, and the mobile device can be continuously presented from a comfortable 3D observation perspective, thereby facilitating a user in viewing operation progress, reducing difficulty of use, and improving the degree of intelligence.

### Brief Description of the Drawings

To more clearly describe technical solutions in embodiments of the present disclosure or in existing technologies, the drawings required for describing the embodiments or the existing technologies are briefly introduced below. Apparently, the drawings described below are merely some embodiments of the present disclosure. Those skilled in the art may also obtain other drawings based on these drawings without inventive effort.
FIG. 1 is a schematic diagram of the composition of an adaptive camera movement system provided in an embodiment of the present disclosure;
FIG. 2 is a schematic structural diagram of an electronic device provided in an embodiment of the present disclosure;
FIG. 3 is a schematic flowchart of an adaptive camera movement method provided in an embodiment of the present disclosure;
FIG. 4 is a schematic diagram of a virtual scene provided in an embodiment of the present disclosure;
FIG. 5 is a schematic layout diagram of a first pose of a virtual camera provided in an embodiment of the present disclosure;
FIG. 6 is a schematic diagram of a camera movement trajectory provided in an embodiment of the present disclosure;
FIG. 7 is a functional block diagram of an adaptive camera movement apparatus provided in an embodiment of the present disclosure; and
FIG. 8 is another functional block diagram of an adaptive camera movement apparatus provided in an embodiment of the present disclosure.

### Detailed Description

To enable those skilled in the art to better understand the solutions of the present disclosure, the technical solutions in the embodiments of the present disclosure are clearly and completely described below with reference to the drawings in the embodiments of the present disclosure. Obviously, the described embodiments are merely some rather than all of the embodiments of the present disclosure. All other embodiments obtained by those skilled in the art based on the embodiments of the present disclosure without inventive effort shall fall within the scope of protection of the present disclosure.

In the description, claims, and drawings of the present disclosure, the terms "first," "second," and the like are used to distinguish different objects rather than to describe a particular order. In addition, the terms "comprise" and "have" and any variations thereof are intended to cover a non-exclusive inclusion. For example, a process, method, system, product, or apparatus that comprises a series of steps or units is not limited to the listed steps or units, and may optionally comprise steps or units not listed, or other steps or units inherent in such process, method, product, or apparatus.

Reference to "an embodiment" herein means that a particular feature, structure, or characteristic described in connection with the embodiment may be included in at least one embodiment of the present disclosure. Occurrences of this phrase in various places in this description do not necessarily refer to the same embodiment, nor are they independent or alternative embodiments mutually exclusive of other embodiments. Those skilled in the art will explicitly and implicitly understand that the embodiments described herein may be combined with other embodiments.

The term "and/or" in embodiments of the present disclosure describes an association relationship between associated objects and indicates that three relationships may exist. For example, A and/or B may indicate that A alone exists, both A and B exist, or B alone exists. Here, A and B may each be singular or plural.

In embodiments of the present disclosure, the symbol "/" may indicate an "or" relationship between associated objects before and after the symbol. In addition, the symbol "/" may also indicate division, that is, a division operation. For example, A/B may indicate A divided by B.

In embodiments of the present disclosure, "equal to" may be used together with "greater than," in which case the technical solution adopted for "greater than" applies, and may also be used together with "less than," in which case the technical solution adopted for "less than" applies. When "equal to" is used together with "greater than," it is not used together with "less than"; when "equal to" is used together with "less than," it is not used together with "greater than."

Currently, traditional handling of occlusion generally relies on a user manually adjusting map display, which requires the user to be relatively familiar with map operation gestures, resulting in a relatively high degree of difficulty for the user and a low degree of intelligence.

In view of the above problem, embodiments of the present disclosure provide an adaptive camera movement method and related apparatus, which are described in detail below with reference to the drawings.

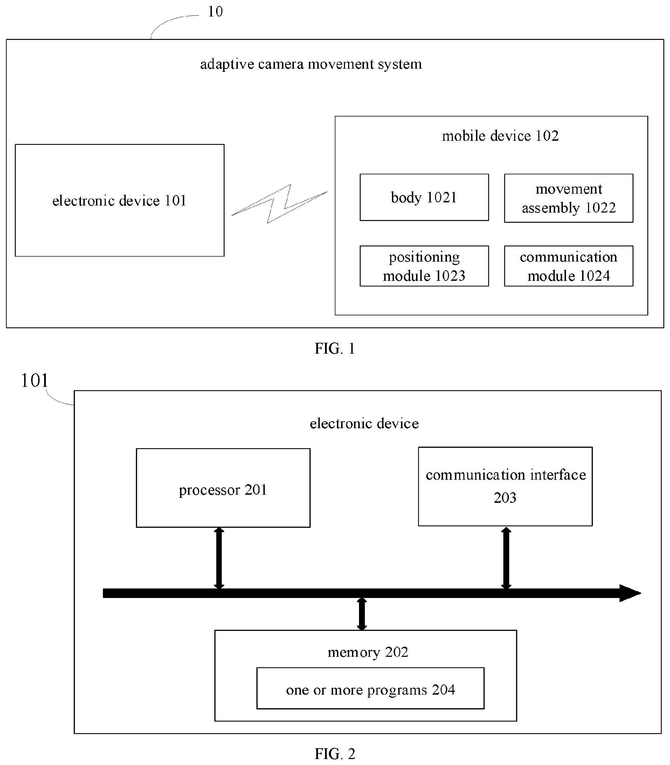

Please refer to FIG. 1, which is a schematic diagram of the composition of an adaptive camera movement system provided in an embodiment of the present disclosure. As shown in FIG. 1, the adaptive camera movement system 10 may include a mobile device 102 and an electronic device 101. The mobile device 102 includes a body 1021, a movement assembly 1022, a positioning module 1023, and a communication module 1024. The movement assembly 1022 is configured to drive the body to move, the positioning module 1023 is configured to position the body, and the communication module 1024 is configured to send second position information to the electronic device 101. In some embodiments, the mobile device 102 may be a lawn mowing robot, the body may be a main body of the lawn mowing robot, the movement assembly 1022 may be moving wheels or a robotic arm of the lawn mowing robot, and the positioning module 1023 may be a Global Positioning System (GPS) of the lawn mowing robot. The electronic device 101 is in communication with the mobile device 102 and is configured to determine whether a first scene element in a first image of a virtual camera occludes a predicted arrival position of the mobile device 102, and, when such occlusion exists, adjust a pose of the virtual camera to a second pose. In some embodiments, the electronic device 101 may include a display screen, a cloud server, a dedicated server, and a GPU server. By way of example, the electronic device 101 may be a mobile phone. The lawn mowing robot may position itself through the positioning module 1023 and transmit a robot position to the mobile phone through the communication module 1024, and the mobile phone may process and display the robot position accordingly.

Please refer to FIG. 2, which is a schematic structural diagram of an electronic device provided in an embodiment of the present disclosure. The electronic device 101 may be an electronic device having computing capability, and may include various other processing devices, as well as various forms of personal computers (PCs), servers, or network devices, and the like. As shown in FIG. 2, the electronic device 101 may include a processor 201, a memory 202, a communication interface 203, and one or more programs 204. The one or more programs 204 are stored in the memory 202 and are configured to be executed by the processor 201. The one or more programs 204 include instructions for performing any step in the solutions described below, and, when performing data transmission such as sending, may optionally call the communication interface 203 to complete a corresponding operation.

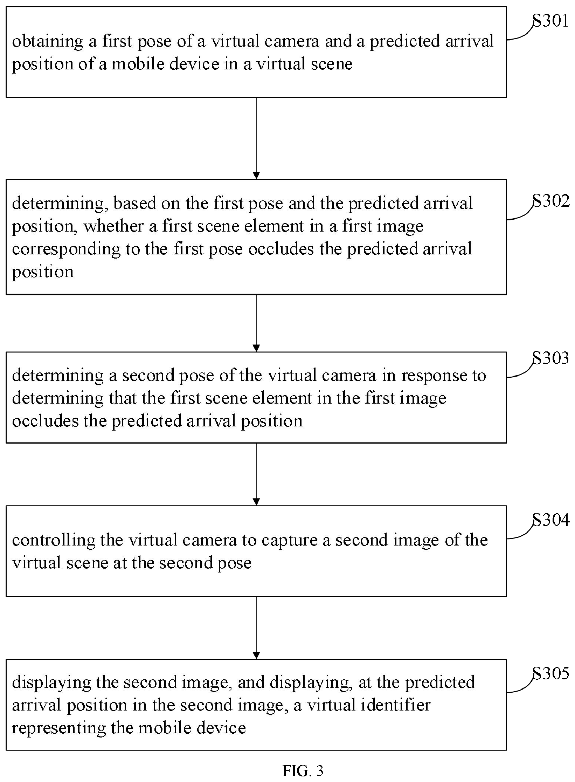

Please refer to FIG. 3, which is a schematic flowchart of an adaptive camera movement method provided in an embodiment of the present disclosure. As shown in FIG. 3, the method includes the following steps.

S301: obtaining a first pose of a virtual camera and a predicted arrival position of a mobile device in a virtual scene.

The virtual camera may be a virtual video camera or a viewpoint. In a 3D virtual scene, the virtual camera may be configured to simulate a viewing perspective of a human eye or a camera.

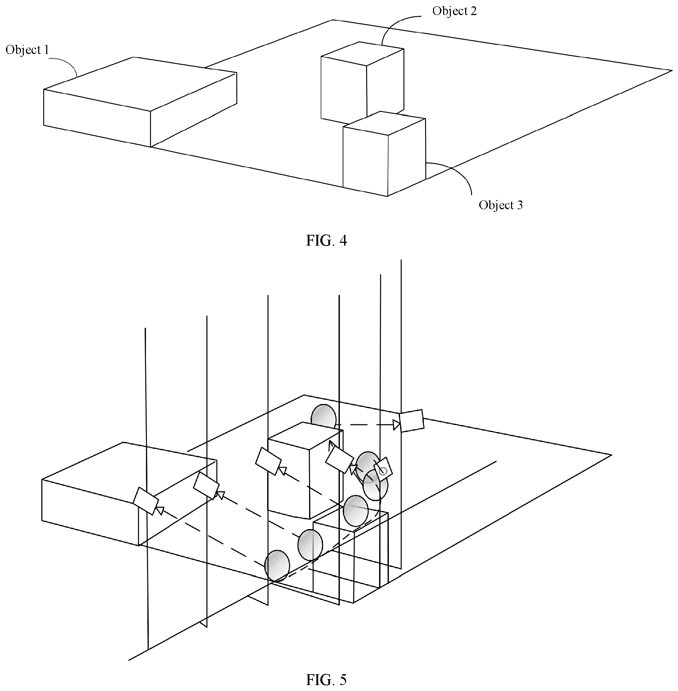

The mobile device may be various mechanical devices, for example, a lawn mowing robot. The virtual scene is a 2.5D or 3D map constructed by a processor based on a real map. The processor may construct object elements in the real map into the virtual scene based on a preconfigured angle and distance, or may directly obtain a virtual image rendered from the real map. The virtual scene may be a lawn scene such as a landscape, agricultural and forestry, or wild scene. For example, when a working scene of the lawn mowing robot is a lawn in an outdoor courtyard, the real map may include stationary objects such as a house or grass clusters, or moving objects such as a child, a kitten, or a puppy. When the working scene of the lawn mowing robot is a lawn in a commercial landscape, the real map may include objects such as trees, grass clusters, public facilities, or people. The virtual scene may be a 2.5D or 3D map formed by three-dimensional rendering by the processor based on the lawn and objects on the lawn. Please refer to FIG. 4, which is a schematic diagram of a virtual scene provided in an embodiment of the present disclosure. As shown in FIG. 4, the processor may convert objects on the lawn into virtual models to generate a relatively simple map schematic diagram. Object 1 may be a grove, and objects 2 and 3 may be houses. Similarly, the processor may also convert objects on the lawn into highly concrete virtual models by rendering shapes of the objects on the lawn to generate models similar or identical to the objects. It should be noted that, based on the preconfigured angle and distance, that is, the angle and distance selected by a user, the processor may display desired object models and lawn shot scales in a viewpoint of the camera.

The predicted arrival position may be a position on a planned route of the mobile device. For example, because the lawn mowing robot plans a traveling route before performing mowing work, the processor may render, in the virtual scene, a route of the lawn mowing robot in the virtual scene corresponding to a traveling route of the lawn mowing robot in the real map. For the route, positions of the lawn mowing robot at several different time points may be selected as predicted arrival positions.

In some embodiments, obtaining the first pose of the virtual camera includes: obtaining first position information, the first position information indicating a pose of the mobile device corresponding to the predicted arrival position in an environment map; and determining the first pose of the virtual camera based on the first position information and a relative pose, the relative pose being a fixed pose between the mobile device and the virtual camera.

The first position information may be positions at some time points on a preplanned path of the mobile device. The positions are positions presented in the virtual scene and correspond to a real map.

The first pose may be an initial pose of the virtual camera, and the first pose of the virtual camera may be determined based on the pose of the mobile device. The relative pose may be a positional relationship and/or an orientation relationship between the virtual camera and the mobile device. Because the pose of the mobile device is determined, the initial pose of the virtual camera is fixed. Please refer to FIG. 5, which is a schematic layout diagram of a first pose of a virtual camera provided in an embodiment of the present disclosure. As shown in FIG. 5, a circle may represent the mobile device, and an icon in the form of a camera intersected by a straight line may represent the virtual camera. FIG. 5 includes six predicted arrival positions of the mobile device, and each predicted arrival position has a corresponding virtual camera, that is, six virtual cameras. A dashed line connects each virtual camera and the corresponding mobile device, indicating that the relative pose between the virtual camera and the mobile device remains fixed. For example, the virtual camera may always be located above and behind the mobile device, a horizontal distance and a vertical distance between the virtual camera and the mobile device are fixed, and a relative orientation relationship between the mobile device and the virtual camera is fixed. The relative orientation relationship may ensure that the mobile device is at the center of the viewpoint of the virtual camera. Based on the above conditions, the initial pose of the virtual camera may be obtained.

Thus, the processor may obtain the predicted arrival position and pose of the mobile device in the virtual scene, and determine an initial pose of the virtual camera based on the predicted arrival position and pose, so as to help predict whether another object occludes the mobile device in an image corresponding to the initial pose of the virtual camera and timely adjust the virtual camera, thereby improving intelligence.

S302: determining, based on the first pose and the predicted arrival position, whether a first scene element in a first image corresponding to the first pose occludes the predicted arrival position.

S303: determining a second pose of the virtual camera in response to determining that the predicted arrival position is occluded by the first scene element in the first image.

S304: controlling the virtual camera to capture a second image of the virtual scene at the second pose.

S305: displaying the second image, and displaying, at the predicted arrival position in the second image, a virtual identifier representing the mobile device.

The first image may be an image or map window obtained by the virtual camera at the first pose, and the first scene element may be a virtual model corresponding to an object on the lawn. Because the real map and a movement trajectory of the mobile device are sent to the processor, the processor may render a virtual map and virtual model based on the above information, and may directly control the virtual camera to obtain a corresponding image at the first pose. In this way, the image may be processed in advance so that a comfortable 3D observation perspective of the mobile device can be continuously presented, thereby facilitating a user in viewing operation progress, reducing difficulty of use, and improving the degree of intelligence.

The virtual identifier may be a virtual model of the mobile device. For example, the shape of the virtual model may be similar or identical to the mobile device. The virtual identifier may also be a simple shape, such as a sphere or a cube.

Whether a first scene element in the first image corresponding to the first pose occludes the predicted arrival position may be determined in the following manner: a straight line is generated between the first pose and the predicted arrival position, and whether the first scene element exists on the straight line may be detected. If the first scene element exists, the predicted arrival position is occluded by the first scene element in the first image. In some embodiments, a laser beam or light may be emitted from the first pose toward the predicted arrival position. If the laser beam or light does not appear at the predicted arrival position, the predicted arrival position is occluded by the first scene element in the first image.

The second image is an image or map window captured by the virtual camera at the second pose after the pose is adjusted. The virtual identifier may be a robot model or another model for identifying the robot.

The first image of the virtual scene may include the first scene element, and the processor may determine whether the first scene element occludes the predicted arrival position. The second image of the virtual scene may include a virtual identifier of the mobile device and the first scene element. The second image presents the predicted arrival position of the mobile device and is not occluded by the first scene element.

Thus, the processor may determine, based on the predicted arrival position of the mobile device and the corresponding first pose of the virtual camera, whether an obstacle exists between the virtual camera and the corresponding position to occlude the view. If occlusion exists for a virtual camera corresponding to a certain position, the pose of the virtual camera corresponding to the position needs to be adjusted so that no occlusion exists between the adjusted virtual camera and the corresponding position. The virtual camera can always present an appropriate and comfortable 3D viewing perspective, thereby facilitating a user in viewing operation progress, reducing difficulty of use, and improving the degree of intelligence.

In some embodiments, when there is a plurality of second poses, determining the second pose of the virtual camera includes: determining, from the plurality of second poses, a target second pose of the virtual camera, wherein an adjustment magnitude between the target second pose and the first pose is a minimum, or occlusion among scene elements in a target second image corresponding to the target second pose is a minimum.

Different observation effects and viewpoints may be achieved by adjusting attributes such as a position, orientation, or field of view of the virtual camera. Optionally, the pose of the virtual camera may be adjusted by adjusting a pitch angle of the virtual camera, an orientation of the virtual camera, a position of the virtual camera, or the like. Because adjustment of the pose of the virtual camera is diverse, a plurality of poses may exist that enable the mobile device not to be occluded. In such a case, a camera pose with the least mutual occlusion among scene elements may be selected as an adjusted camera pose, or a pose with the smallest camera adjustment magnitude may be selected as the adjusted camera pose.

In some embodiments, determining the target second pose of the virtual camera includes: obtaining at least one relative distance based on the plurality of second poses and the first pose, each relative distance indicating a distance between a corresponding second pose and the first pose; and determining, as the target second pose, the second pose corresponding to a minimum relative distance.

The relative distance may be a distance between an initial pose of the virtual camera and an adjusted camera pose. In this manner, motion of the virtual camera is smoother, and a corresponding map window does not jump significantly, thereby improving a user's viewing experience.

In some embodiments, determining the target second pose of the virtual camera includes: obtaining, for the plurality of second poses, second images of the virtual scene captured by the virtual camera at the plurality of second poses; determining, for each of the second images, a quantity of second scene elements, wherein a second scene element is a scene element which is incompletely displayed in the corresponding second image; and determining, as the target second pose, the second pose corresponding to a minimum number of second scene elements.

The second scene element may be the first scene element or another obstacle other than the mobile device. The second scene element is incompletely displayed in the respective second image, indicating that mutual occlusion exists. In this way, for each map window corresponding to a second pose of a virtual camera, a quantity of occluded obstacles in the map window may be counted, and a camera pose corresponding to a minimum quantity is taken as the adjusted camera pose, so that a user can see as many map elements as possible, thereby facilitating understanding of a position of the mobile device and improving the user's viewing experience.

Thus, when a plurality of poses satisfy conditions, a better camera pose may be selected according to occlusion among scene elements and an adjustment magnitude of the virtual camera, thereby improving the user's viewing experience and intelligence.

In one possible embodiment, the method further includes: obtaining a planned path of the mobile device, the planned path including a plurality of predicted arrival positions and poses of the mobile device upon arriving at the predicted arrival positions; and obtaining the first position information according to the planned path.

The planned path may be predesigned. For example, before performing mowing, the lawn mowing robot plans a traveling route in advance, and the processor may obtain at least a part of the planned traveling route from the lawn mowing robot, or obtain only position points of the lawn mowing robot at several subsequent time points, or obtain the entire planned traveling route completely.

The processor may map the planned path to the virtual scene according to a correspondence between the real map and the virtual scene, so that a movement trajectory of the mobile device in the virtual scene corresponds to the planned path in the real map. As shown in FIG. 5, the dashed line segment with arrows is the planned path of the mobile device.

Thus, the processor may obtain position information of the mobile device in the real map based on the planned path and process the position information into corresponding first position information in the virtual scene, thereby improving processing accuracy and intelligence.

In some embodiments, the method further includes: receiving second position information sent by the mobile device; and the controlling the virtual camera to capture the second image of the virtual scene at the second pose includes: controlling the virtual camera to capture the second image of the virtual scene at the second pose in response to determining, based on the second position information, that the mobile device has arrived at the predicted arrival position.

The second position information may be a current position of the mobile device in the virtual scene. The second position information may indicate whether the mobile device arrives at the predicted arrival position. If the processor receives the second position information and determines, based on the second position information, that the mobile device arrives at the predicted arrival position, the processor may control the virtual camera to capture the second image of the virtual scene at the second pose.

In some embodiments, the lawn mowing robot may position itself in real time and transmit a robot position to a mobile phone. The mobile phone may display a model representing the robot at a corresponding position in a 3D map according to the robot position, and determine, according to the robot position, a camera position corresponding to the robot position on a movement trajectory of the virtual camera, as well as a pitch angle and orientation of the virtual camera. The 3D map captured by the virtual camera may be displayed on the mobile phone.

Thus, the processor may control, according to a current position of the mobile device, the virtual camera to capture a map window at a corresponding pose, without continuously performing repeated capture. A map window containing the mobile device can be continuously presented, thereby facilitating a user in viewing operation progress, reducing difficulty of use, and improving processing intelligence.

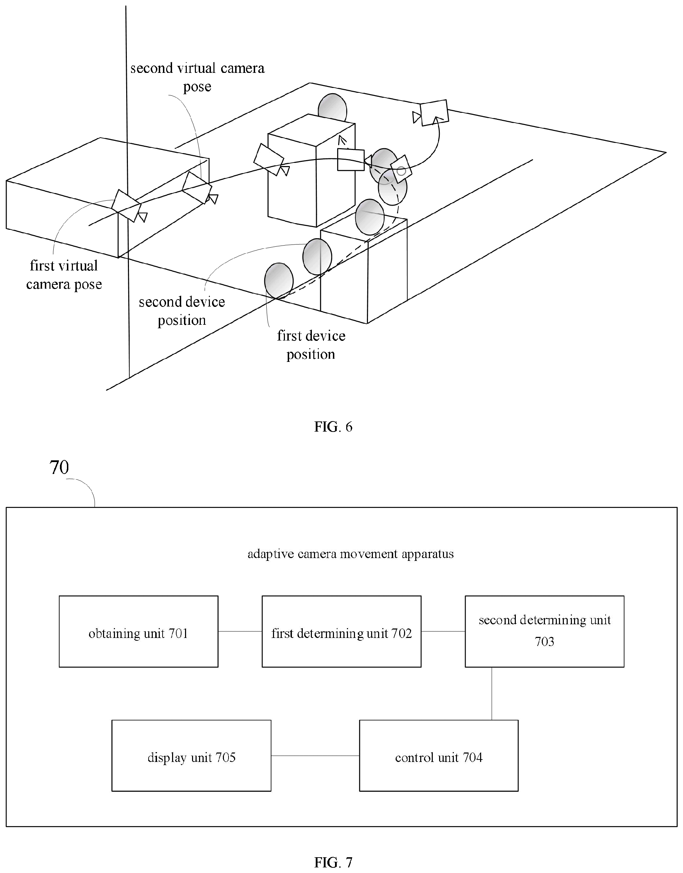

In some embodiments, when there is a plurality of predicted arrival positions of the mobile device, each predicted arrival position has a first pose of the virtual camera and an adjusted second pose corresponding thereto. The processor may generate a camera movement trajectory based on the finally obtained first poses and/or second poses.. The camera movement trajectory may include the first poses and the second poses, indicating that poses of virtual cameras corresponding to some predicted arrival positions do not need to be changed. The camera movement trajectory may also include only the second poses, indicating that poses of virtual cameras corresponding to all predicted arrival positions need to be changed. The camera movement trajectory may further include only the first poses, indicating that poses of virtual cameras corresponding to all predicted arrival positions do not need to be changed. As the mobile device moves, the virtual camera may move along the camera movement trajectory. Please refer to FIG. 6, which is a schematic diagram of a camera movement trajectory provided in an embodiment of the present disclosure. As shown in FIG. 6, a sphere may represent a position point of the mobile device, a camera shape may represent a pose of the virtual camera, a dashed line with arrows is a movement trajectory of the mobile device, and a solid line with arrows is a camera movement trajectory of the virtual camera. The dashed-line route is the movement trajectory of the mobile device, and the camera movement trajectory corresponds to the movement trajectory. When the mobile device arrives at a first device position, the virtual camera may move to a corresponding first virtual camera pose; when the mobile device arrives at a second device position, the virtual camera may move to a corresponding second virtual camera pose. The camera movement trajectory enables the virtual camera to continuously follow movement of the mobile device without the view being occluded by obstacles, that is, positions of the mobile device on the traveling route correspond one-to-one with positions of the virtual camera on the camera movement trajectory. It should be noted that the camera movement trajectory of the virtual camera may be implemented by smooth movement of a map engine used by the processor.

Please refer to FIG. 7, which is a functional block diagram of an adaptive camera movement apparatus provided in an embodiment of the present disclosure. The adaptive camera movement apparatus 70 includes an obtaining unit 701 configured to obtain a first pose of a virtual camera and a predicted arrival position of a mobile device in a virtual scene; a first determining unit 702 configured to determine, based on the first pose and the predicted arrival position, whether a first scene element in a first image corresponding to the first pose occludes the predicted arrival position, the first image being an image obtained by the virtual camera at the first pose; a second determining unit 703 configured to determine, in response to a determination that the predicted arrival position is occluded by the first scene element in the first image, a second pose of the virtual camera; a control unit 704 configured to control the virtual camera to capture a second image of the virtual scene at the second pose; and a display unit 705 configured to display the second image, and display, at the predicted arrival position in the second image, a virtual identifier representing the mobile device.

In one possible embodiment, with respect to obtaining the first pose of the virtual camera, the obtaining unit 701 is specifically configured to: obtain first position information, the first position information indicating a pose of the mobile device corresponding to the predicted arrival position; and determine the first pose based on the first position information and a preset relative pose, the relative pose being a fixed pose between the mobile device and the virtual camera.

In one possible embodiment, wherein there is a plurality of second poses, with respect to determining the second poses of the virtual camera, the second determining unit 703 is specifically configured to: determine, from the plurality of second poses, a target second pose of the virtual camera, wherein an adjustment magnitude between the target second pose and the first pose is a minimum, or occlusion among scene elements in a target second image corresponding to the target second pose is a minimum.

In one possible embodiment, with respect to determining the target second pose of the virtual camera according to the plurality of second poses, the second determining unit 703 is specifically configured to: obtain at least one relative distance according to the plurality of second poses and the first pose, each relative distance indicating a distance between a corresponding second pose and the first pose; and determine, as the target second pose, the second pose corresponding to a minimum relative distance.

In one possible embodiment, with respect to determining the target second pose of the virtual camera according to the plurality of second poses, the second determining unit 703 is specifically configured to: obtain second images of the corresponding virtual scene captured by the virtual camera at the plurality of second poses; determine a quantity of second scene elements in each of the second images, the second scene elements being scene elements incompletely displayed in the corresponding second image; and determine, as the target second pose, the second pose corresponding to a minimum quantity of second scene elements.

It can be understood that, because method embodiments and apparatus embodiments are different presentations of the same inventive concept, contents of the method embodiments in the present disclosure should be synchronously applicable to the apparatus embodiments, and details are not repeated herein.

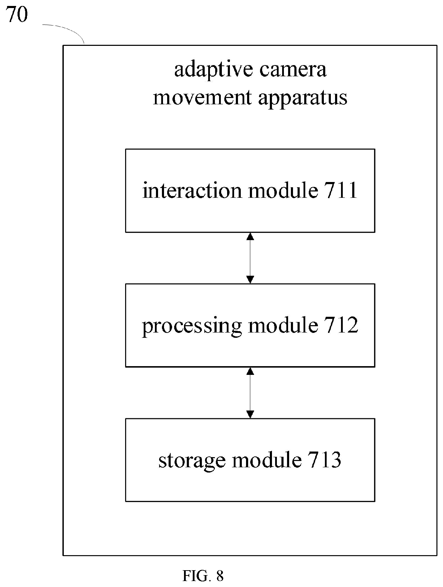

In a case of integrated units, please refer to FIG. 8, which is another functional block diagram of an adaptive camera movement apparatus provided in an embodiment of the present disclosure. As shown in FIG. 8, the adaptive camera movement apparatus 70 includes: a processing module 712 configured to control and manage operations of the adaptive camera movement apparatus, for example, performing steps of the obtaining unit 701, the first determining unit 702, the second determining unit 703, the control unit 704, and the display unit 705, and/or performing other processes of the technologies described herein; and an interaction module 711 configured to perform interaction between the adaptive camera movement apparatus and other devices. As shown in FIG. 8, the adaptive camera movement apparatus 70 may further include a storage module 713 configured to store program code and data based on the adaptive camera movement apparatus.

The processing module 712 may be a processor or controller, for example, a Central Processing Unit (CPU), a general-purpose processor, a Digital Signal Processor (DSP), an ASIC, an FPGA, another programmable logic device, transistor logic device, hardware component, or any combination thereof. The processing module 712 may implement or execute various exemplary logical blocks, modules, and circuits described in connection with the disclosure of the present disclosure. The processor may also be a combination for implementing computing functions, for example, a combination including one or more microprocessors, or a combination of a DSP and a microprocessor, and the like. The interaction module 711 may be a transceiver, an RF circuit, or a communication interface. The storage module 713 may be a memory.

All related contents of respective scenarios involved in the foregoing method embodiments may be cited in function descriptions of corresponding functional modules, and details are not repeated herein. The above adaptive camera movement apparatus may perform the adaptive camera movement method shown in FIG. 3.

The solutions of the embodiments of the present disclosure are mainly described above from a perspective of execution processes on the method side. It can be understood that, for the electronic device to implement the above functions, the electronic device includes hardware structures and/or software modules corresponding to execution of the respective functions. Those skilled in the art should readily understand that, in combination with the embodiments described herein, the present disclosure may be implemented in hardware or in a combination of hardware and computer software. Whether a particular function is implemented in hardware or in computer software driving the hardware depends on particular applications and design constraints of the technical solutions. Professionals may use different methods for each particular application to implement the described functions, but such implementation should not be considered as departing from the scope of the present disclosure.

The embodiments of the present disclosure may divide functional units of the electronic device according to the foregoing method examples. For example, corresponding functional units may be divided according to respective functions, or two or more functions may be integrated into one processing unit. The integrated units may be implemented in hardware form or in the form of software functional units. It should be noted that division of units in the embodiments of the present disclosure is illustrative only and is merely a logical function division. In actual implementation, other division manners may be used.

The embodiments of the present disclosure further provide a computer-readable storage medium. The computer-readable storage medium stores a computer program, and the computer program causes a computer to perform part or all of steps of any method described in the foregoing method embodiments, the computer including an electronic device.

It should be noted that, for the foregoing method embodiments, for ease of description, they are all described as a series of combinations of actions. However, those skilled in the art should know that the present disclosure is not limited by the described order of actions because, according to the present disclosure, some steps may be performed in other orders or simultaneously. In addition, those skilled in the art should also know that the embodiments described in this description are all preferred embodiments, and the actions and modules involved are not necessarily required by the present disclosure.

In the foregoing embodiments, descriptions of the respective embodiments emphasize different aspects. For a part not described in detail in a certain embodiment, reference may be made to related descriptions of other embodiments.

In the several embodiments provided in the present disclosure, it should be understood that the disclosed apparatus may be implemented in other manners. For example, the apparatus embodiments described above are merely illustrative. For example, the division of the above units is only a logical function division, and other division manners may be used in actual implementation. For example, a plurality of units or components may be combined or integrated into another system, or some features may be ignored or not performed. In addition, mutual coupling or direct coupling or communication connection shown or discussed may be indirect coupling or communication connection through some interfaces, apparatuses, or units, and may be in electrical or other forms.

The units described as separate components above may or may not be physically separate. Components displayed as units may or may not be physical units, that is, may be located in one place or distributed across a plurality of network units. Some or all of the units may be selected according to actual needs to achieve objectives of the solutions of the embodiments.

In addition, the respective functional units in the embodiments of the present disclosure may be integrated into one processing unit, or the respective units may physically exist separately, or two or more units may be integrated into one unit. The integrated unit may be implemented in hardware form or in the form of software functional units.

If the integrated unit is implemented in the form of software functional units and sold or used as an independent product, the integrated unit may be stored in a computer-readable storage medium. Based on such understanding, the technical solutions of the present disclosure, in essence, or a part contributing to existing technologies, or all or part of the technical solutions, may be embodied in the form of a software product. The computer software product is stored in a storage medium and includes a plurality of instructions for causing a computer device, which may be a personal computer, server, or network device, to perform all or part of the steps of the methods described in the embodiments of the present disclosure. The foregoing storage medium includes: a USB flash drive, a Read-Only Memory (ROM), a Random Access Memory (RAM), a removable hard disk, a magnetic disk, an optical disc, or another medium that may store program code.

Those skilled in the art may understand that all or part of the steps in the various methods of the above embodiments may be completed by a program instructing relevant hardware. The program may be stored in a computer-readable storage medium. The storage medium may include: a flash drive, a Read-Only Memory (ROM), a Random Access Memory (RAM), a magnetic disk, an optical disc, or the like.

The embodiments of the present disclosure have been described in detail above. Specific examples are used herein to explain principles and implementations of the present disclosure. Descriptions of the above embodiments are merely used to help understand the method and core ideas of the present disclosure. Meanwhile, persons of ordinary skill in the art, according to ideas of the present disclosure, may make changes in specific implementations and application scope. In summary, contents of this description should not be construed as limiting the present disclosure.

Although the present disclosure is disclosed as above, the present disclosure is not limited thereto. Any person skilled in the art may readily conceive changes or substitutions without departing from the spirit and scope of the present disclosure, and may make various variations and modifications, including combinations of the foregoing different functions and implementation steps, and implementation modes using software and hardware, all of which fall within the scope of protection of the present disclosure.

## Claims

1. An adaptive camera movement method, comprising:
obtaining a first pose of a virtual camera and a predicted arrival position of a mobile device in a virtual scene;
determining, based on the first pose and the predicted arrival position, whether a first scene element in a first image corresponding to the first pose occludes the predicted arrival position, the first image being an image obtained by the virtual camera at the first pose;
determining a second pose of the virtual camera, in response to determining that the predicted arrival position is occluded by the first scene element in the first image;
controlling the virtual camera to capture a second image of the virtual scene at the second pose; and
displaying the second image, and displaying, at the predicted arrival position in the second image, a virtual identifier representing the mobile device.

2. The method of claim 1, wherein obtaining the first pose of the virtual camera comprises:
obtaining first position information, the first position information indicating a pose of the mobile device corresponding to the predicted arrival position; and
determining the first pose based on the first position information and a preset relative pose, the relative pose being a fixed pose between the mobile device and the virtual camera.

3. The method of claim 1, wherein, when there is a plurality of the second poses, the step of determining the second pose of the virtual camera comprises:
determining, from the plurality of second poses, a target second pose of the virtual camera, wherein an adjustment magnitude between the target second pose and the first pose is minimum, or occlusion of scene elements in a target second image corresponding to the target second pose is minimum.

4. The method of claim 3, wherein determining the target second pose of the virtual camera comprises:
obtaining at least one relative distance based on the plurality of second poses and the first pose, each relative distance indicating a distance between a corresponding second pose and the first pose; and
determining the second pose corresponding to a minimum relative distance as the target second pose.

5. The method of claim 3, wherein determining the target second pose of the virtual camera comprises:
obtaining, for the plurality of second poses, second images of the virtual scene captured by the virtual camera at the plurality of second poses;
determining, for each of the second images, a quantity of second scene elements, wherein the second scene element is a scene element which is incompletely displayed in corresponding second image; and
determining the second pose with a minumum number of second scene elements as the target second pose.

6. The method of claim 2, further comprising:
obtaining a planned path of the mobile device, the planned path including a plurality of predicted arrival positions and poses of the mobile device upon arriving at the predicted arrival positions;
wherein obtaining the first position information comprises:
obtaining the first position information according to the planned path.

7. The method of any one of claims 1 to 6, further comprising:
receiving second position information sent by the mobile device;
wherein controlling the virtual camera to capture the second image of the virtual scene at the second pose comprises:
controlling the virtual camera to capture the second image of the virtual scene at the second pose in response to determining, based on the second position information, that the mobile device has arrived at the predicted arrival position.

8. The method of claim 1, wherein the virtual identifier comprises a preset shape or a virtual model, the virtual model being determined according to an appearance of the mobile device.

9. An adaptive camera movement apparatus, comprising:
an obtaining unit configured to obtain a first pose of a virtual camera and a predicted arrival position of a mobile device in a virtual scene;
a first determining unit configured to determine, based on the first pose and the predicted arrival position, whether a first scene element in a first image corresponding to the first pose occludes the predicted arrival position, the first image being an image obtained by the virtual camera at the first pose;
a second determining unit configured to determine, in response to a determination that the first scene element in the first image occludes the predicted arrival position, a second pose of the virtual camera;
a control unit configured to control the virtual camera to capture a second image of the virtual scene at the second pose; and
a display unit configured to display the second image, and display, at the predicted arrival position in the second image, a virtual identifier representing the mobile device.

10. An electronic device, comprising a processor, a memory, and one or more programs, the one or more programs being stored in the memory and configured to be executed by the processor, the one or more programs including instructions for performing the adaptive camera movement method of any one of claims 1 to 8.

11. A non-transitory computer-readable storage medium storing computer program instructions, wherein the computer program instructions, when executed by a processor, cause the processor to perform the adaptive camera movement method of any one of claims 1 to 8.

12. An adaptive camera movement system, comprising the electronic device of claim 10 and a mobile device, wherein the mobile device includes a body, a movement assembly, a positioning module, and a communication module, the movement assembly being configured to drive the body to move, the positioning module being configured to position the body, and the communication module being configured to send second position information to the electronic device.
